# FASCICULE DE BREVET EUROPEEN

(11) **EP 3 408 004 B1**
(45) Date de publication et mention de la délivrance du brevet: **05.05.2021**
(21) Numéro de dépôt: 17706289.0
(22) Date de dépôt: 25.01.2017
(51) Int. Cl.: B01D 35/153, B01D 35/157, B01D 35/16, B01D 36/00, B01D 29/21

(54) **FILTRE À CARBURANT ET SUPPORT DE MONTAGE DONT LA SORTIE EST OBTURÉE PAR UN CLAPET EN CAS DE RETRAIT D'UN INSERT FILTRANT**
KRAFTSTOFFFILTER MIT EINER MONTAGEVORRICHTUNG, DEREN AUSLASS DURCH EIN VENTIL VERSCHLOSSEN WIRD, WENN EIN FILTEREINSATZ ENTFERNT WIRD.
FUEL FILTER AND MOUNTING SUPPORT OF WHICH THE OUTLET IS SEALED BY A VALVE IN CASE OF REMOVAL OF A FILTER INSERT

(30) Priorité: 29.01.2016 FR 1650723
(43) Date de publication de la demande: 05.12.2018
(73) Titulaire: Sogefi Filtration, 78280 Guyancourt (FR)
(72) Inventeur: FAYOLLE, Laurent, 92000 Nanterre (FR); LALLEMAN, Xavier, 94200 Ivry sur Seine (FR)
(74) Mandataire: Plasseraud IP
(86) Numéro de dépôt international: PCT/FR2017/050159
(87) Numéro de publication internationale: WO 2017/129896

(56) Documents cités:
- EP-A2- 2 067 514
- WO-A1-2015/042348
- DE-A1-102013 008 987
- US-A1- 2005 072 396
- US-A1- 2010 213 115

## Description

### DOMAINE TECHNIQUE DE L'INVENTION

La présente invention est relative aux filtres à carburant/combustible pour moteurs à combustion interne, et en particulier aux filtres à gazole comportant un insert filtrant amovible par rapport à un boîtier de filtre.

### ARRIERE-PLAN TECHNOLOGIQUE DE L'INVENTION

Un filtre à carburant du genre précité comprend typiquement une entrée et une sortie de carburant définies par le boîtier et un insert filtrant logé à l'intérieur du boîtier de façon à délimiter une zone en amont de carburant brut qui communique avec l'entrée et une zone en aval de carburant filtré qui communique avec la sortie. Ce genre de filtre permet, dans un circuit d'alimentation en gazole pour moteur diesel, de filtrer le gazole pour le débarrasser de ses impuretés et optionnellement de séparer l'eau en suspension. Dans un véhicule à moteur, le circuit d'alimentation en carburant comporte un filtre à carburant, une pompe à injection et une pompe de circulation du carburant (ou pompe d'amorçage) qui peut être placée en amont du filtre (on parle alors de "pompe de gavage"), le filtre fonctionne alors en pression, ou en aval du filtre, le filtre fonctionne alors en dépression.

Ce genre de filtre peut présenter un organe fonctionnel, par exemple un élément de canalisation formant partie de moyens d'évacuation destinés aux gaz contenus dans le carburant, un organe chauffant (le cas échéant sous la forme d'un élément de circulation d'un liquide chaud) ou une tige pour obturer un canal d'évacuation de liquide. Il est souvent prévu de placer ce genre d'organe fonctionnel au travers de l'insert filtrant qui est amovible, que l'organe fonctionnel soit réutilisable ou non. L'organe fonctionnel présente alors généralement une position centrale.

Lors de l'utilisation d'un filtre en dépression, la dépression due à l'aspiration du carburant engendre un phénomène de cavitation. L'air contenu dans le carburant se sépare du liquide et il se crée dans le filtre une poche d'air qu'il faut évacuer. Utiliser un élément de canalisation ou organe central similaire présente ainsi un intérêt lorsqu'il faut faire circuler le gaz en direction d'une sortie située du côté inférieur du boîtier.

Différents moyens de dégazage sont employés dans l'art antérieur, avec utilisation d'un organe central fonctionnel parmi lesquels on peut distinguer deux familles :
- une première famille regroupant les moyens de dégazage disposés au niveau de la *"partie propre",* c'est-à-dire dans une zone en aval du média filtrant ;
- une seconde famille regroupant les moyens de dégazage disposés au niveau de la *"partie sale",* c'est-à-dire dans une zone en amont du média filtrant.

Bien entendu, un filtre à carburant pourvu de moyens de dégazage ne peut pas être confondu avec un filtre à huile tel que décrit dans le document US 2005/0072396. Le document US 2005/072396 se rapporte à une solution de filtration d'huile de lubrification, sans traiter une problématique d'échappement de gaz.

Dans la première famille, il est connu par le brevet DE 4330840 C1 un filtre du type susmentionné utilisant un petit orifice de dégazage afin d'empêcher une accumulation d'air dans un point haut du filtre (y compris en amont du média filtrant). La présence d'un petit orifice évite le passage d'importantes bulles d'air vers la pompe qui entraîneraient le désamorçage de celle-ci.

Le document DE 4330840 C1 décrit des filtres à carburant et des inserts filtrants comportant un premier flasque (supérieur), un deuxième flasque (inférieur), un élément filtrant cylindrique en papier qui est supporté entre le premier flasque et le deuxième flasque et qui entoure un tube de canalisation qui achemine le gaz (typiquement l'air) vers un passage de fuite formé dans une base du filtre. Le tube de canalisation est monté solidaire de la base et capte le gaz via un orifice calibré qui est défini sous le premier flasque, en haut de la zone en aval du média filtrant.

Dans la deuxième famille, il est connu par le document DE 19519352 ou par le document DE 102013008987 un filtre du type susmentionné utilisant un petit orifice de dégazage situé dans une extrémité supérieure d'un tube de canalisation qui s'engage avec étanchéité au travers d'une ouverture centrale du premier flasque (supérieur). Ainsi, le tube forme une dérivation pour le gaz plus léger que le carburant et pouvant passer au travers de l'orifice calibré : le gaz présent dans la zone en amont de la filtration peut donc être évacué sans nécessité de traverser radialement le média filtrant.

Avec ce genre de filtre, la fiabilité du système d'évacuation des gaz est grande car le tube de canalisation peut être remplacé en même temps que l'insert filtrant. On peut ainsi minimiser le risque d'obstruer l'orifice de section de passage étroite (typiquement avec un diamètre de quelques dixièmes de millimètre).

Dans tout ce qui suit, l'expression orifice d'évacuation de gaz doit être comprise dans le présent contexte comme un orifice à section étroite de passage et donc calibré pour ne pas générer des bulles de gaz trop importantes (leur taille restant inférieure ou égale quelques millimètres par exemple, de préférence sans dépasser 2 ou 3 mm). Ceci est déjà connu en soi et se comprend sans ambiguïté dans le domaine de la filtration d'un liquide tel que du carburant.

L'insert filtrant décrit dans le document DE 19519352 requiert un joint additionnel pour connecter le tube au premier flasque et ne contribue pas à améliorer l'étape de remplacement de l'insert filtrant. D'ailleurs, un inconvénient de ce type d'insert filtrant est qu'il libère directement le conduit de sortie pour le carburant propre lorsqu'il est retiré. Ceci peut engendrer une pollution de ce conduit de sortie par du carburant non filtré pendant une opération de remplacement de l'insert filtrant.

Plus généralement, pour des filtres à carburant dont le boîtier est réutilisable, il existe un besoin pour améliorer les conditions de remplacement des inserts filtrants logés dans un boîtier dont la sortie de carburant se situe du côté du fond.

### DESCRIPTION GENERALE DE L'INVENTION

La présente invention a pour but de proposer un filtre à carburant du type ayant une sortie de carburant du côté opposé au couvercle supérieur et pour lequel l'opération de remplacement de l'insert filtrant est réalisée en guidant mieux le carburant résiduel présent dans le volume intérieur.

A cet effet, il est proposé selon l'invention un filtre à carburant tel que défini dans la revendication 1.

Grâce à ces dispositions, l'organe d'actionnement déplace le clapet en fonction de la position de l'insert filtrant : la position d'obturation peut alors être obtenue en démontant le couvercle avec le retrait associé de l'insert filtrant. Le carburant brut ne peut pas alors s'évacuer vers la sortie et ainsi, par l'intégration d'un organe d'actionnement dans la partie centrale du filtre, on minimise ou supprime le risque de pollution de la sortie par du carburant non filtré.

De plus, la paroi transversale définit un passage pour acheminer les gaz contenus dans le carburant vers un canal de fuite distinct de l'entrée et de la sortie. Ainsi, les conditions de remplacement de l'insert filtrant sont améliorées, tout en permettant une évacuation efficace des gaz contenus dans le carburant.

Selon une particularité, l'organe d'actionnement s'étend parallèlement à l'axe longitudinal et est adapté pour faire circuler un fluide distinct du carburant et/ou un carburant plus chaud que le carburant brut. Ainsi l'organe central dispose d'au moins une fonction propre (organe fonctionnel) en sus de la fonction d'actionnement du clapet.

Dans une variante, l'organe d'actionnement peut être alimenté électriquement via une paire de pôles électriques formée dans une extrémité inférieure (qui peut le cas échéant traverser un flasque inférieur de l'insert filtrant). Ces pôles sont raccordés électriquement à deux bornes correspondantes prévues dans la partie de base et reliées à un connecteur électrique d'un type connu en soi. Les contacts des deux bornes sont formés par exemple chacun par l'extrémité d'un organe de rappel élastique en matériau électriquement conducteur. Un guidage de l'insert filtrant par un élément de guide (détrompeur prévu sur une paroi latérale du boîtier/réceptacle) peut le cas échéant être prévu pour s'assurer d'une orientation correcte pour la connexion électrique de l'organe d'actionnement sur les deux bornes.

Une fonction de chauffage pour prévenir le risque de colmatage peut être prévue au cœur du filtre et/ou dans une partie proche ou en saillie par rapport au flasque supérieur, par utilisation de pastilles ou plaques de chauffage (élément chauffant de type PTC). L'organe d'actionnement s'étend longitudinalement en pouvant servir de support de montage à un ensemble qui inclut les lignes ou bandeaux de conduction vers le ou les éléments chauffants. On peut par exemple définir un fourreau F ou structure analogue dont la paroi latérale permet de fixer, et typiquement surmouler, les lignes ou bandeaux de conduction.

Selon une option, une circulation de fluide pour chauffer l'espace intérieur creux peut être obtenue par un élément de canalisation, qui peut être relié respectivement à deux ports prévus sur le couvercle. Cet élément de canalisation peut alors traverser le premier flasque et former un organe d'actionnement du clapet. Dans ce cas, l'élément de canalisation présente aussi des première et deuxième extrémités respectivement pour l'engagement contre le premier flasque et pour l'engagement contre le clapet.

Selon une particularité, la deuxième extrémité de l'organe d'actionnement comporte une première partie de contact, qui forme de préférence une partie mâle pour s'insérer dans un conduit déterminé d'une interface de raccordement incluant la paroi transversale. La deuxième extrémité de l'organe d'actionnement présente en outre une deuxième partie de contact, de préférence décalée longitudinalement par rapport à la première partie de contact et formant des projections radiales, une collerette ou un épaulement, qui vient buter axialement contre le clapet et permettant de pousser celui-ci vers le bas.

Selon une particularité, le clapet comporte une face supérieure d'obturation située plus bas qu'au moins une surface d'engagement en prise avec l'organe d'actionnement et agencé en périphérie du conduit déterminé.

Dans divers modes de réalisation du filtre selon l'invention, on peut éventuellement avoir recours en outre à l'une et/ou à l'autre des dispositions suivantes :
- le filtre présente une fonction de séparation d'eau.
- l'eau est séparée du carburant dans le volume intérieur, de préférence en utilisant un élément séparateur d'eau ou une fonction de coalescence (cette fonction de séparation étant typiquement réalisée par un élément intégré à ou solidaire de l'insert filtrant).
- des moyens d'évacuation du carburant brut sont prévus à l'opposé du couvercle ; de tels moyens d'évacuation peuvent correspondre à une sortie de vidange de carburant brut située dans le fond, automatiquement rendue accessible par un élément de fermeture sollicité par l'insert filtrant.
- l'élément de fermeture est monté mobile dans la partie de base pour sélectivement fermer un canal de liaison entre le volume intérieur et les moyens d'évacuation, dans une position d'appui de l'extrémité axiale inférieure de l'insert filtrant contre l'élément de fermeture.
- le clapet s'étend à l'intérieur d'une zone intérieure déterminée située entre le fond et la paroi transversale, le clapet étant mobile parallèlement à l'axe longitudinal entre une position haute correspondant à la position d'obturation et une position basse dans laquelle la voie de passage communique avec la sortie via la zone intérieure déterminée, la deuxième extrémité de l'organe d'actionnement étant adaptée pour pousser le clapet.
- la partie de base comporte un bol incluant l'entrée et la sortie, et une paroi annulaire (de préférence intégralement formée d'un bloc avec le bol) qui s'étend vers le haut depuis le fond et définit un contact annulaire étanche avec un deuxième flasque de forme générale annulaire définissant l'extrémité axiale inférieure de l'insert filtrant, la paroi annulaire délimitant une circonférence externe de la zone intérieure déterminée.
- un élément de rappel élastique qui sollicite le clapet vers la position d'obturation est logé dans la zone intérieure déterminée, de préférence à distance de la paroi annulaire.
- l'organe d'actionnement s'étend parallèlement à l'axe longitudinal et fait partie d'une voie d'évacuation destinée aux gaz contenus dans le carburant, la voie d'évacuation comprenant au moins un orifice de petite section situé au-dessus ou à l'extrémité supérieure de l'espace intérieur creux ; ainsi on prévoit dans l'espace intérieur creux et dans la partie de base, de façon compacte, une fonction d'évacuation de gaz qui s'ajoute à l'ouverture automatique (en cas de mise en place de l'insert filtrant) de l'accès à la sortie pour carburant filtré.
- la voie d'évacuation des gaz est configurée soit pour capter le gaz dans la zone en amont de la filtration, soit pour capter le gaz dans la zone en aval.
- la partie de base supporte une interface de raccordement incluant la paroi transversale et reliée de manière étanche à la paroi annulaire, l'interface de raccordement formant une continuité d'étanchéité entre la paroi annulaire et le deuxième flasque, de façon à ce qu'une zone en amont de la filtration qui communique avec l'entrée soit séparée d'une zone en aval de la filtration qui communique avec la sortie, la paroi annulaire entourant tout ou partie d'un conduit déterminé défini par l'interface de raccordement, le conduit déterminé faisant partie de la voie d'évacuation.
- l'interface de raccordement comporte une partie engagée de façon étanche par un contact annulaire, de préférence radial, contre la paroi annulaire et un fourreau qui s'étend dans l'espace intérieur creux (jusqu'à atteindre ou dépasser la moitié de la hauteur de l'insert filtrant dans la position montée) et dont le fond définit la voie de passage ; ainsi le fourreau forme une barrière qui empêche le carburant brut présent autour du média filtrant de circuler sous l'insert filtrant vers la voie de passage, ce qui est important pendant le bref moment ou l'insert filtrant n'est plus en contact avec l'interface de raccordement alors que le clapet n'a pas encore atteint la position d'obturation.
- l'organe d'actionnement est défini par un élément de canalisation qui s'étend dans l'espace intérieur creux en communiquant avec un canal de fuite pour les gaz, le canal de fuite étant distinct de la sortie et formé dans la partie de base.
- l'orifice de petite section est défini par le premier flasque et communique avec l'intérieur de l'élément de canalisation.
- le clapet présente une face supérieure d'obturation, de préférence sensiblement plane, et au moins une projection longitudinalement en saillie vers le haut depuis la face supérieure d'obturation, de sorte que la face supérieure d'obturation et une face d'engagement de la projection sont respectivement situées au dessus et en dessous d'un siège défini par la paroi transversale
- la deuxième extrémité de l'organe d'actionnement comprend une extrémité libre adaptée pour s'engager de façon étanche avec un raccord tubulaire formé dans la paroi transversale, et au moins un organe de butée, de préférence une collerette, pour s'engager axialement contre la projection longitudinale en poussant le clapet et pour s'engager également contre le raccord ; ainsi l'organe d'actionnement présente une configuration robuste, en étant protégé dans l'espace intérieur creux d'une part, et rigidement fixé à une interface de raccordement d'autre part (avec un contact radial combiné à un contact axial contre l'interface, on minimise les sollicitations de l'organe d'actionnement, ce qui est avantageux dans un environnement soumis à des vibrations quand le véhicule roule).
- le clapet présente une face inférieure butant contre une partie saillante par rapport au fond et un élément de coulissement tubulaire monté autour d'un guide longitudinal de la partie de base, l'élément de coulissement s'étendant vers le bas depuis la face inférieure du clapet.

L'invention concerne également un support de montage pour filtre à carburant incluant l'entrée et la sortie du côté du fond inférieur et pouvant définir une interface de raccordement améliorée pour un insert filtrant.

A cet effet, il est proposé un support de montage pour former l'extrémité inférieure du filtre à carburant selon l'invention, le support de montage comprenant :
- une partie de base formant un fond ayant une délimitation externe, et pourvue d'une paroi annulaire s'étendant autour d'un axe longitudinal (à distance de la délimitation externe dans une option préférée) jusqu'à un bord annulaire supérieur, d'une entrée pour du carburant brut et d'une sortie pour du carburant filtré située du côté intérieur de la paroi annulaire (l'entrée étant située dans une zone différente, par exemple du côté extérieur de la paroi annulaire si elle est proche du fond ou située dans le fond),
- une paroi transversale qui s'étend plus haut que le bord annulaire supérieur et recouvre une zone intérieure déterminée délimitée par la paroi annulaire, en formant une voie de passage qui définit un accès unique vers la sortie,
- un clapet monté mobile par rapport à la paroi transversale et sollicité par défaut par des moyens de rappel élastique vers une position haute d'obturation de la voie de passage, le clapet étant actionnable par poussée par le dessus, de sorte que l'accès vers la sortie est sélectivement permis lorsque le clapet est dans une position basse, la partie de base comprenant en outre un canal de fuite pour des gaz contenus dans le carburant, distinct de l'entrée et de la sortie et s'étendant au travers de la zone intérieure déterminée.

Ainsi, le support de montage cumule de nombreuses fonctions, dont l'évacuation des gaz contenus dans le carburant. Le support délimite avantageusement une zone intérieure pour le carburant filtré grâce à une paroi annulaire, tout en fermant automatiquement/par défaut l'accès à cette zone intérieure tant que le clapet n'est pas engagé par un appui axial qui est central (en particulier par rapport à la position excentrée de l'entrée de carburant).

Selon une particularité, la paroi transversale fait partie d'une interface de raccordement qui présente :
- un fourreau longitudinal qui s'étend depuis une face supérieure de la paroi transversale ;
- un tronçon supérieur de conduit entouré par le fourreau et coaxial avec le fourreau ; et
- une tronçon inférieur de conduit, dans lequel débouche le tronçon supérieur, qui fait saillie dans une direction opposée au fourreau, le tronçon inférieur et la voie de passage étant séparés entre eux par une portion de déviation adaptée pour dévier un flux de gaz du tronçon supérieur vers le tronçon inférieur.

L'invention concerne également une utilisation d'un élément de canalisation dans l'insert filtrant pour permettre, dans la configuration montée pour la filtration, une circulation adaptée des différents fluides (carburant brut, gaz, carburant filtré) sans risque de polluer la sortie de carburant filtré lors d'une phase de rechange.

A cet effet, il est proposé une utilisation d'un élément de canalisation dans un insert filtrant (insert amovible par rapport au boîtier de filtre correspondant) du type pourvu d'un média filtrant de forme annulaire s'étendant entre un premier flasque et un deuxième flasque et adapté pour la filtration de carburant, dans laquelle l'élément de canalisation et l'insert filtrant sont fonctionnels dans un état assemblé dans un filtre comportant le support de montage de l'invention, l'élément de canalisation s'engageant par une première extrémité avec le premier flasque en s'étendant dans un espace intérieur creux délimité par le média filtrant, une deuxième extrémité de l'élément de canalisation permettant de déplacer le clapet du support de montage vers une position d'ouverture tout en débouchant vers le canal de fuite (l'élément de canalisation définissant ainsi un organe pour actionner le clapet), l'un parmi l'élément de canalisation et le premier flasque présentant un orifice dont la section est adaptée pour faire circuler sélectivement du gaz au travers de l'élément de canalisation.

Ainsi, on ajoute une fonction nouvelle pour un insert filtrant, avec la possibilité pour l'extrémité axiale inférieure de l'insert filtrant de remplir également une fonction d'actionnement d'un élément de fermeture, typiquement pour fermer un canal de purge pour le carburant brut. Le positionnement de l'insert filtrant associé à l'élément de canalisation est permis le cas échéant sans besoin d'une quelconque indexation en rotation, ce qui est avantageux pour l'opérateur (gain de temps pour la mise en place de l'unité amovible définie par l'insert filtrant et l'élément de canalisation). Le recours à un fourreau dans l'interface de raccordement du support de montage est une option qui facilite en outre le positionnement centré correct de l'élément de canalisation.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 illustre en perspective et via une coupe longitudinale l'agencement selon l'invention de l'insert filtrant et de l'organe d'actionnement dans le boîtier de filtre, dans une position basse du clapet obturateur ;
- la figure 2 montre un mode d'assemblage entre une partie de base et une interface de raccordement, afin de définir un support de montage pour un filtre à carburant, selon une forme de réalisation de l'invention ;
- la figure 3 est une vue en perspective du clapet obturateur faisant partie du support illustré à la figure 2 ;
- la figure 4 est une vue en coupe d'un filtre à carburant avec le clapet dans la même position basse qu'illustré sur la figure 1 ;
- la figure 5 est une vue en éclaté illustrant l'unité amovible et le couvercle prêts à être installés sur le support de montage ;
- la figure 6A est une vue de détail en coupe longitudinale, illustrant une position haute du clapet obturateur pour fermer l'accès à la sortie de carburant filtré ;
- la figure 6B est une vue de détail selon une coupe verticale parallèle à l'axe longitudinal, illustrant une position fonctionnelle de l'insert filtrant qui permet de fermer un orifice de purge.

### DESCRIPTION DES MODES DE REALISATION PREFERES DE L'INVENTION

Sur les différentes figures, des références identiques indiquent des éléments identiques ou similaires.

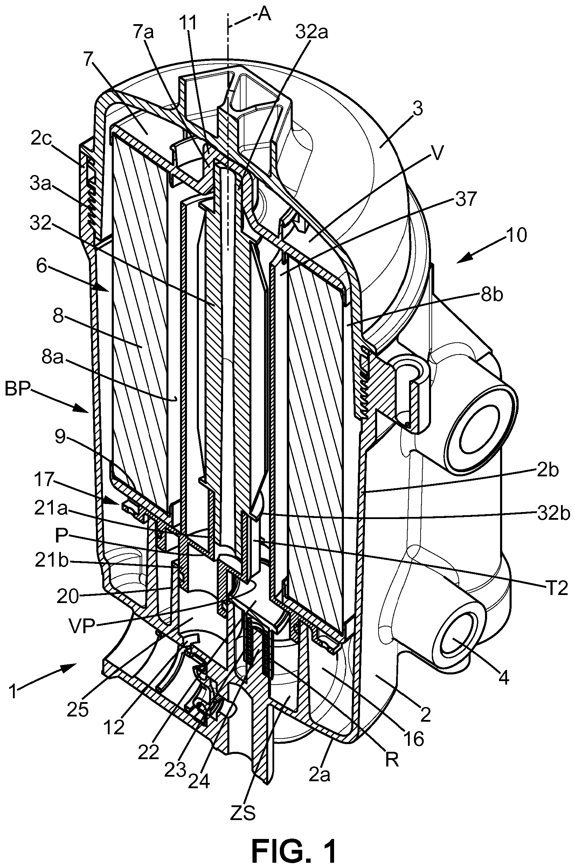

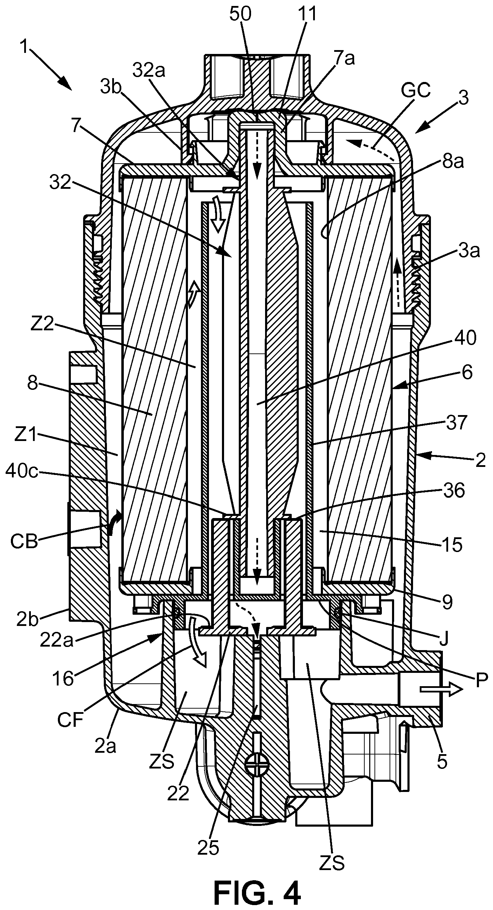

Les figures 1 et 4 représentent une forme de réalisation du filtre à carburant 1 (gazole ou carburant similaire) qui possède des moyens d'évacuation des gaz contenus dans le carburant qui s'étendent entre une extrémité haute de captage des gaz 11 et une extrémité inférieure 12 pour l'échappement de ces gaz. Ce filtre 1 comprend un réceptacle 10 sous la forme d'un boîtier qui est par exemple en deux parties. Le réceptacle 10 présente une paroi inférieure et une paroi supérieure (ici formée par un couvercle 3 ou paroi analogue d'obturation). Dans l'exemple non limitatif des figures, la paroi inférieure est formée par un bol 2 typiquement en métal ou en plastique. Le bol 2 présente un fond 2a à partir duquel s'étend vers le haut une paroi latérale 2b, ici sensiblement cylindrique et présentant une partie d'extrémité supérieure 2c directement solidaire du couvercle 3. Ce couvercle 3, formant la paroi supérieure du boîtier, est directement fixé au bol 2. Plus généralement, on comprend que le couvercle 3 est relié de manière étanche au bol 2.

Le bord du couvercle 3 peut être par exemple vissé sur le bord du bol 2, à l'aide de plusieurs vis traversant des trous et engagées dans des écrous, ou par l'intermédiaire d'un filetage périphérique 3a, de façon connue en soi. Dans des variantes de réalisation, on peut utiliser une pièce additionnelle pour former tout ou partie de la paroi latérale 2b.

Comme illustré sur la figure 1, la paroi inférieure ici formée par le bol 2 présente une entrée 4 de carburant à filtrer ainsi qu'une sortie 5 de carburant filtré pour permettre la circulation et la filtration du carburant à l'intérieur du filtre 1. Le boîtier est raccordable de façon interchangeable à des conduites d'un système d'alimentation en carburant d'un véhicule à moteur à combustion.

Dans cet exemple, le fond 2a du bol 2 appartient à une partie de base BP. Un volume intérieur V du filtre 1 est ici défini entre la partie de base BP et le couvercle 3, afin de loger un insert filtrant 6. L'extrémité haute de captage des gaz 11 peut être définie du côté d'une extrémité axiale supérieure de l'insert filtrant 6. Un premier flasque 7 peut former l'extrémité axiale supérieure et est configuré pour s'engager, directement ou éventuellement indirectement, contre le couvercle 3. L'insert filtrant 6 peut présenter une forme générale annulaire et s'étend suivant un axe longitudinal A. Cet axe longitudinal A est de préférence un axe central de révolution de l'insert filtrant 6 et éventuellement correspond aussi à un axe central des moyens d'évacuation. L'insert filtrant 6 présente un média filtrant 8 et un deuxième flasque 9 pouvant former une extrémité axiale inférieure en contact avec la partie de base BP.

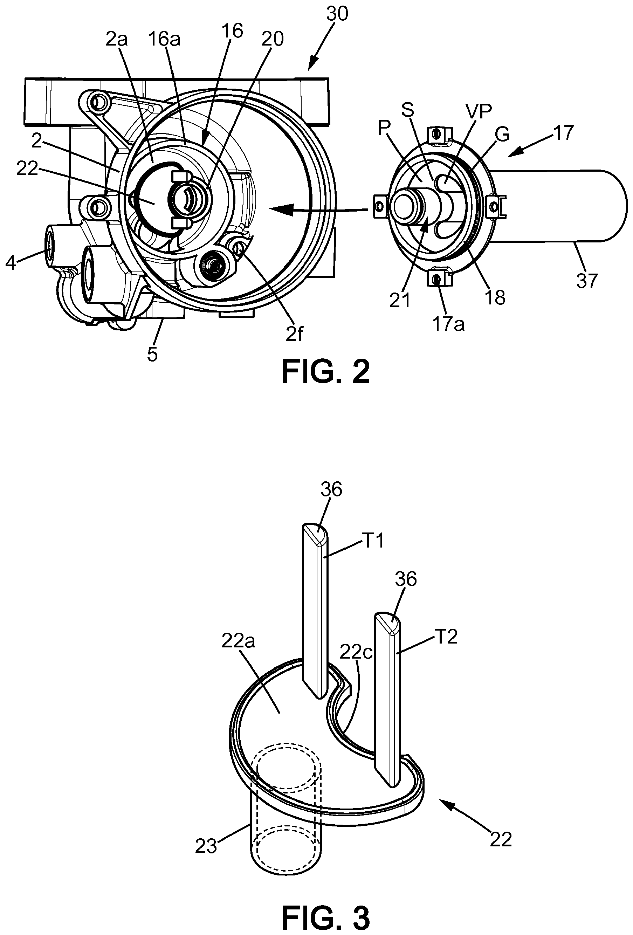

Le média filtrant 5 est maintenu entre le premier flasque 7 et le deuxième flasque 9. Ce média filtrant 8 s'étend de préférence autour de l'axe longitudinal A qui peut éventuellement coïncider avec l'axe de révolution du bol 2 lorsque la paroi 2b est cylindrique. L'espace intérieur creux 15 délimité par la face interne 8a du média filtrant 8 communique avec la sortie 5 visible sur la figure 4, ce qui permet à du carburant filtré CF de circuler dans cet espace en direction de la sortie 5. Autour de la face externe 8b du média filtrant 8, du carburant brut CB circule en provenance de l'entrée 4 visible sur les figures 1 et 2. La face externe 8b étant plus étendue que la face interne 8a, le sens de filtration centripète est plus efficace pour la séparation des impuretés.

Bien entendu, d'autres formes de réalisation de l'insert filtrant 6 peuvent être utilisées, par exemple avec seulement le premier flasque 7 ou sans aucun flasque axial, un élément d'armature tubulaire pouvant être prévu dans ce cas en étant maintenu en position par un contact avec la face interne 8a du média filtrant 8.

En référence aux figures 2, 3 et 4, la partie de base BP est ici délimitée extérieurement par la paroi latérale 2b qui délimite extérieurement le fond 2a. La partie de base BP comporte une paroi annulaire 16 s'étendant parallèlement à la paroi latérale 2b et à distance de la délimitation externe, autour d'un axe longitudinal qui peut optionnellement coïncider avec l'axe longitudinal A du média filtrant 8. Le bord annulaire supérieur 16a de la paroi annulaire 16 s'étend ici perpendiculairement à l'axe longitudinal A et forme une surface d'appui axiale pour une interface de raccordement 17. La face interne de cette paroi annulaire 16 est de plus en contact annulaire radial étanche avec une projection inférieure de l'interface de raccordement 17. Cette projection inférieure est ici définie sous la forme d'une jupe 18, qui présente un élément d'étanchéité annulaire J tel qu'un joint torique (par exemple logé dans une gorge G adaptée) pour définir le contact annulaire d'étanchéité.

La jupe 18 appartient à une paroi transversale P qui s'étend sous l'insert filtrant 6. Comme visible sur la figure 2, la paroi transversale P peut présenter des brides 17a ou autres éléments permettant la fixation de l'interface de raccordement 17 à la partie de base BP (ici via une ou plusieurs vis traversant chacune une bride 17a et s'engageant dans une partie femelle 2f agencée dans la partie de base BP en formant un filetage).

En référence aux figures 1 et 2, l'interface de raccordement 17 s'engage également avec étanchéité, de préférence par un contact annulaire radial, contre la face interne d'un conduit central 20 qui fait saillie vers le haut depuis le fond 2a, parallèlement à la paroi annulaire 16. Dans une option préférée, le conduit central 20 n'est pas coaxial avec la paroi annulaire 16, ce qui permet de placer un clapet 22 du côté intérieur de la paroi annulaire 16.

En référence aux figures 1 et 3, ce clapet 22 présente par exemple un élément de coulissement tubulaire 23 monté autour d'un guide longitudinal 24 de la partie de base BP au même niveau de hauteur que le conduit central 20. Le clapet 22 présente une face inférieure butant, dans une position basse pour l'ouverture de la voie de passage VP, contre une partie saillante de la partie de base BP qui fait saillie par rapport au fond 2a. L'élément de coulissement tubulaire 23 s'étend vers le bas depuis la face inférieure du clapet 22, en étant décalé latéralement par rapport à la zone d'appui contre la partie saillante. Comme illustré sur la figure 4, le conduit central 20 peut définir cette partie saillante. Entre la paroi annuaire 16 et le conduit central 20, on définit une zone intérieure déterminée ZS débouchant hors du réceptacle 10 via la sortie 5.

On peut voir sur les figures 1 et 4 que la zone intérieure déterminée ZS s'étend par exemple entre le fond 2a et une paroi transversale P définie par l'interface de raccordement 17. En s'engageant par le dessus contre la paroi annulaire 16, cette paroi transversale P permet de séparer de façon étanche la zone intérieure déterminée ZS, prévue pour la circulation de carburant filtré CF, de la zone Z1 en amont de la filtration qui s'étend de façon périphérique autour de l'insert filtrant 6. Le carburant brut CB arrivant par l'entrée 4 doit ainsi traverser le média filtrant 8 et ne peut pas circuler dans la zone intérieure déterminée ZS. De plus, dans l'exemple illustré, la paroi transversale P définit en parallèle deux voies de circulation : l'une pour l'accès du carburant filtré CF à la zone intérieure déterminée ZS depuis l'espace intérieur 15, l'autre pour l'acheminement de gaz vers un canal de fuite 25. Ce canal de fuite 25 peut déboucher sur l'extrémité inférieure 12.

La voie de passage VP est définie dans la paroi transversale P avec une position décalée vers l'intérieur par rapport à la jupe 18, comme illustré sur la figure 2, de sorte qu'elle permet de relier l'espace intérieur creux 15 à la sortie 5. Un conduit déterminé 21 destiné aux gaz est formé par l'interface de raccordement 17 et adapté pour communiquer sélectivement avec le conduit central 20 sans interférer avec la circulation de carburant filtré CF au travers de la voie de passage VP.

La figure 2 illustre l'assemblage du clapet 22 dans un support de montage 30 qui forme l'extrémité inférieure du filtre à carburant 1. L'interface de raccordement 17 est superposée à la paroi annulaire 16 et se raccorde à cette paroi 16 et au conduit central 20, de façon à ce qu'une face supérieure d'obturation 22a appartenant au clapet 22 soit à l'aplomb de la voie de passage VP. La paroi transversale P de l'interface de raccordement 17 peut alors définir un siège S pour le clapet 22. Ce siège S correspond ici à une portion, adjacente à la voie de passage VP, qui est formée dans la face inférieure de la paroi transversale P.

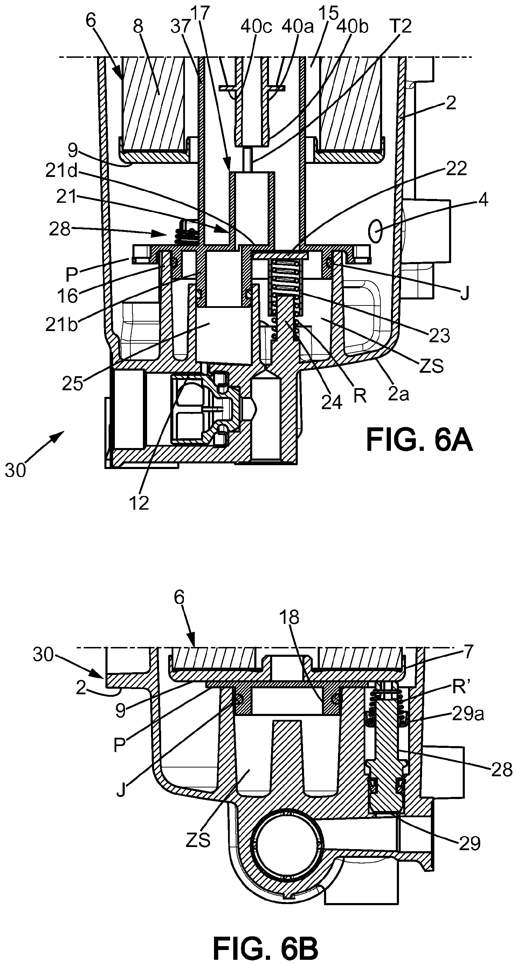

Le clapet 22 est monté mobile par rapport à la paroi transversale P et sollicité par défaut par des moyens de rappel élastique R, par exemple sous la forme d'un ressort, vers une position haute d'obturation de la voie de passage VP (en appui sur le siège S), comme illustré sur la figure 6A. Dans ce cas, l'interface de raccordement 17 et le clapet 22 se complètent pour recouvrir de manière étanche la zone intérieure déterminée ZS et le carburant ne peut plus circuler vers la sortie 5.

Comme visible sur la figure 6A, les moyens de rappel élastique R peuvent être logés dans la zone intérieure déterminée ZS, de préférence à distance de la paroi annulaire 16. On peut utiliser un ressort hélicoïdal monté autour du guide longitudinal 24 et en appui par son extrémité inférieure sur un épaulement fixe formé dans la partie de base BP. Ce ressort de compression est logé intérieurement dans l'élément de coulissement tubulaire 23 et, du côté de son extrémité supérieure, il peut pousser (directement ou indirectement) la portion d'obturation du clapet 22 vers le siège S défini par la paroi transversale P.

Pendant la fermeture étanche de l'accès à la zone intérieure détermine ZS, qui peut correspondre au moment où on retire l'insert filtrant 6, il est prévu préférentiellement un canal de purge 29 qui est ouvert seulement lorsque le filtre à carburant 1 n'est plus en fonctionnement.

La figure 6B illustre le recours à un élément de fermeture 28 sollicité par défaut vers une position haute par un ressort hélicoïdal R' ou autre organe de rappel élastique similaire. Dans une position d'appui de l'extrémité axiale inférieure de l'insert filtrant 6 contre l'élément de fermeture 28, le ressort R' est dans un état comprimé et en appui contre une surface annulaire de butée axiale inférieure 29a qui est fixe par rapport à la partie de base BP.

Cette configuration permet une ouverture automatique du canal de purge 29 par retrait de l'insert filtrant 6 (qui est utilisé pour pousser l'élément de fermeture 28 vers une position d'obturation du canal de purge 29). En effet, dès que l'appui cesse, le ressort R' s'étire du côté supérieur en entraînant avec lui l'élément de fermeture 28.

En référence aux figures 2 et 6A, l'interface de raccordement 17 peut présenter avantageusement un fourreau 37 qui s'étend perpendiculairement à la paroi transversale P. Ce fourreau 37 est ici formé d'une pièce avec la paroi transversale P et également (de préférence) avec le conduit déterminé 21. La voie de passage VP et le conduit déterminé 21 débouchent chacun par le haut dans le fourreau 37.

Ainsi, dans la position haute de l'élément de fermeture 28 qui est obtenue par le soulèvement de l'insert filtrant 6, on comprend que le carburant s'échappe par gravité dans le canal de purge 29 montré sur la figure 6B, le fourreau 37 ayant un effet barrière qui empêche l'arrivé de carburant supplémentaire dans la zone intérieure déterminé ZS. Ceci est avantageux pour éviter une pollution par du carburant brut CB du côté de la sortie 5, même dans la courte période qui correspond à la remontée du clapet 22 (ici sous l'effet du ressort de compression ou moyens de rappel élastique R analogues, comme illustré sur la figure 6B).

Les figures 6A-6B illustrent le cas d'un élément de fermeture 28 monté mobile longitudinalement dans la partie de base BP pour sélectivement fermer un canal de purge 29 qui fait la liaison entre le volume intérieur V et les moyens d'évacuation correspondants. Plus généralement, on peut prévoir à l'opposé du couvercle 3 tous moyens adaptés pour évacuer le carburant brut CB, lors d'une phase de remplacement de l'insert filtrant 6.

Comme bien visible sur les figures 1 et 4, le clapet 22 est actionnable par poussée par le dessus, de sorte que l'accès vers la sortie 5 est sélectivement permis lorsque le clapet 22 est dans une position basse. Il est prévu ici que les positions hautes respectives du clapet 22 et de l'élément de fermeture 28 soient obtenues automatiquement par retrait du couvercle 3 auquel est lié l'insert filtrant 6.

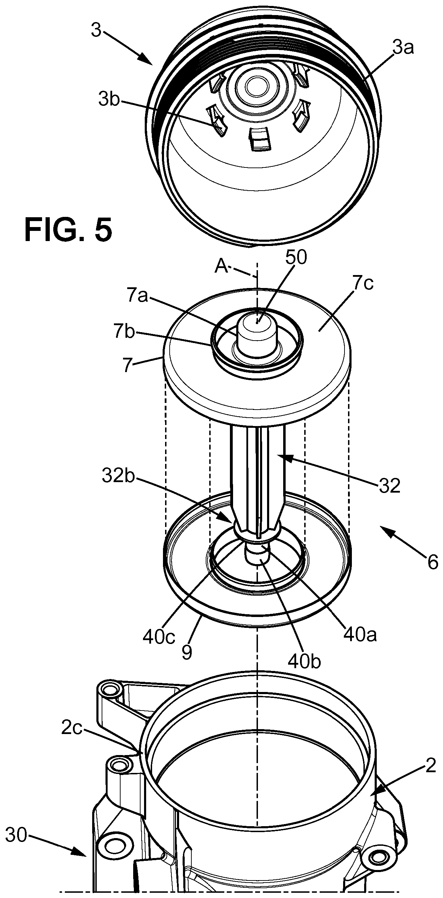

La figure 6A illustre ces deux positions hautes, tandis que les figures 4 et 5 montrent un exemple de languettes 3b pouvant permettre de rendre l'insert filtrant 6 solidaire du couvercle 3. Sur le premier flasque 7, un organe annulaire de retenue 7b, saillant par rapport à une portion radiale 7c et pourvu d'un rebord saillant vers l'extérieur, peut permettre de rendre l'insert filtrant 6 solidaire du mouvement de retrait du couvercle 3 sans entraîner une rotation de l'insert filtrant 6, au moins au début du désengagement.

Bien entendu, on peut utiliser toute autre façon de fixer mécaniquement (de façon amovible) le couvercle 3 et le premier flasque 7 ou un autre organe structurel de l'insert filtrant 6.

En référence aux figures 1 à 3, on peut voir que le clapet 22 peut optionnellement présenter une ou au moins deux projections T1, T2 longitudinalement en saillie par rapport à la face supérieure d'obturation 22a, qui est de préférence sensiblement plane. La face supérieure d'obturation 22a est située en dessous du siège défini par la paroi transversale P et par exemple en dehors de l'espace intérieur 15, tandis que la face d'engagement 36 des projections T1 ou T2 est située entièrement dans l'espace intérieur 15. Ceci peut permettre de loger l'actionneur entièrement dans l'espace intérieur 15, avec un effet de protection amélioré (pas d'extrémité saillante vers le bas par rapport à l'extrémité axiale inférieure de l'insert filtrant 6). Cette configuration n'est cependant pas limitative. Il reste avantageux que l'actionneur soit défini par un organe d'actionnement 32, afin d'optimiser les fonctions dans le filtre à carburant 1 sans impact sur l'encombrement.

Lorsqu'une fonction de dégazage est souhaitée, l'organe d'actionnement 32 comporte ou peut être défini par un élément de canalisation 40 qui se connecte fluidiquement au canal de fuite 25 formé dans la partie de base BP (qui est distinct de l'entrée 4 et de la sortie 5). L'élément de canalisation 40 communique avec le canal de fuite 25, qui s'étend au travers de la zone intérieure déterminée ZS, grâce au conduit déterminé 21.

En référence aux figures 1 et 4, tandis que l'organe d'actionnement 32 est solidaire du premier flasque 7 du côté de sa première extrémité 32a, la deuxième extrémité 32b formée à l'opposé s'engage avec le conduit déterminé 21 de l'interface de raccordement 17 lorsque l'insert filtrant 6 est en position montée/fonctionnelle. L'extrémité supérieure du conduit déterminé 21 est définie par un tronçon supérieur de conduit 21a qui fait saillie par rapport à la face supérieure de la paroi transversale P sur laquelle peut venir s'appuyer le deuxième flasque 9.

La première extrémité 32a est ici illustrée comme fixe en coulissement par rapport à l'insert filtrant 6, par un engagement direct contre le premier flasque 7. Dans des variantes de réalisation de moindre préférence, on peut fixer la première extrémité 32a de façon espacée par rapport au premier flasque 7 en utilisant une pièce additionnelle, par exemple un organe annulaire qui s'étend entre les flasques 7 et 9 et qui forme une cheminée avec l'orifice 50 de petite section (tout en traversant le premier flasque 7 avec un contact annulaire étanche).

Plus généralement, il est permis que l'organe d'actionnement 32 soit monté fixe au voisinage du premier flasque 7, optionnellement en étant raccordé (de façon amovible ou non) au couvercle 3 sachant que l'insert filtrant 6 est alors typiquement rendu solidaire d'un mouvement de translation en retrait du couvercle 3 par rapport au support de montage 30, lors d'une étape de changement de l'insert filtrant 6.

En référence aux figures 5 et 6A, la deuxième extrémité 32b comporte optionnellement :
- une première partie de contact 40a, qui forme de préférence une partie mâle pour s'insérer dans le conduit déterminé 21, en particulier dans le tronçon supérieur de conduit 21a ; et
- une deuxième partie de contact 40c, de préférence décalée longitudinalement par rapport à la première partie de contact 40a et adaptée pour buter axialement contre le clapet 22, ici sur une ou plusieurs faces d'engagement 36, pour le pousser vers le bas.

La première partie de contact 40a peut présenter un bourrelet annulaire 40b qui fait saille radialement vers l'extérieur, ce qui permet de définir un contact étanche annulaire. Ainsi, on évite le risque d'échappement de gaz dans l'espace intérieur 15 du côté de la zone Z2 (cf. figure 4) où circule le carburant filtré CF. La deuxième partie de contact 40c peut être définie par une collerette ou un épaulement par exemple et venir en appui contre le bord du tronçon supérieur de conduit 21a, afin de stabiliser la position de raccordement de la deuxième extrémité 32b.

Sur la figure 4, les flèches désignant les gaz de carburant GC illustrent le cheminement de ce gaz dans le filtre 1 en cours de fonctionnement. La connexion entre le premier flasque 7 et la première extrémité 32a peut être réalisée par engagement serré dans le creux d'une portion de cheminée 7a définie centralement par le premier flasque 7. La portion de cheminée 7a fait saillie longitudinalement vers l'extérieur depuis la portion radiale 7c et définit l'orifice 50 calibré permettant d'empêcher une accumulation d'air et/ou autre gaz dans un point haut du volume intérieur V du filtre 1.

L'orifice 50 est ici adjacent au couvercle 3 et peut être optionnellement traversé par l'axe longitudinal A. Cet orifice 50 de petite section est situé au-dessus de l'espace intérieur creux 15, ici dans une face supérieure de la portion de cheminée 7a. Avantageusement, l'orifice 50 de petite section présente un diamètre (ou dimension caractéristique similaire) compris entre 0,1 et 1 mm.

Bien que l'extrémité haute de captage des gaz 11 correspond ici à une structure saillante (portion de cheminée 7a) définie par le premier flasque 7, on comprend que l'extrémité 11 peut être réalisée différemment, par exemple en formant l'orifice 50 à l'extrémité 32a supérieure de l'élément de canalisation 40 dans une variante où celui-ci fait saillie vers le haut en traversant le premier flasque 7. Plus généralement, les moyens d'évacuation des gaz peuvent être configurés, soit pour capter les gaz dans la zone Z1 en amont de la filtration (ici juste au-dessus du premier flasque 7), soit pour capter les gaz dans la zone Z2 en aval de la filtration (par exemple juste en dessous du premier flasque 7).

Du fait du contact annulaire radial serré et étanche entre l'extrémité 32a définie par l'élément de canalisation 40 et la face interne correspondante de la portion de cheminée 7a, les gaz de carburant GC circulent nécessairement de façon descendante via l'élément de canalisation 40 puis le conduit déterminé 21 de l'interface 17 pour rejoindre le canal de fuite 25.

Dans l'état monté de l'insert filtrant 6, comme illustré sur les figures 1 et 4, la paroi transversale P s'étend sous l'un au moins parmi l'extrémité axiale inférieure de l'insert filtrant 6 et l'organe d'actionnement 32. Le fourreau 37 permet un guidage de l'organe d'actionnement 32 lors de la mise en place de l'unité amovible incluant l'insert filtrant 6 et l'organe d'actionnement 32.

Comme le support de montage 30 est adapté pour une évacuation de gaz dans l'exemple illustré, l'interface de raccordement 17 et l'organe d'actionnement 32 définissent tout ou partie de la conduite d'évacuation de gaz contenus dans le carburant GC. La conduite débouche ainsi directement dans le conduit central 20, par le tronçon inférieur de conduit 21b.

En référence à la figure 6A, on peut voir que le tronçon inférieur 21b et la voie de passage VP sont séparés entre eux par une portion de déviation 21d adaptée pour dévier un flux de gaz du tronçon supérieur 21a vers le tronçon inférieur 21b. Cette portion de déviation 21d peut être radiale et placée dans le même plan général que la paroi transversale P. Ce type de configuration permet d'utiliser la portion de déviation 21d comme portion de siège pour le clapet 22, tronçon supérieur 21a en faisant jouer au tronçon inférieur 21b peut permettre de guider en translation un bord externe concave 22c du clapet 22. En référence à la figure 3, on peut voir que la partie d'obturation du clapet 22 a une forme de croissant, ce qui permet au bord externe concave 22c d'épouser une partie de la circonférence du tronçon inférieur 21b. Les projections T1 et T2 peuvent être réparties près de chacune des extrémités du bord externe concave 22c.

En référence à la figure 4, on peut voir que le fourreau 37 sert aussi à canaliser le carburant filtré CF, qui s'écoule de haut en bas dans ce fourreau 37 (depuis l'ouverture supérieure du fourreau, formée dans l'espace intérieur 15) pour descendre jusque dans la zone intérieure déterminée ZS puis la sortie 5. Dans le cas où l'organe d'actionnement 32 permet un dégazage, les gaz GC circulent dans l'élément de canalisation 40 de façon parallèle à la circulation du carburant filtré CF dans le fourreau 37.

L'orifice 50 d'évacuation de gaz présente par exemple une section de passage pouvant être de forme ronde ou présentant éventuellement un ou plusieurs rétrécissements, de sorte à diffuser l'air et/ou autre gaz sous forme de bulles de petite taille. On entend par "petite taille" des bulles dont le diamètre est inférieur à 4 mm.

Un des avantages de l'invention réside dans la possibilité de cumuler des fonctions présentes dans l'espace intérieur creux 15 délimité par le média filtrant 8, et de rendre simple le remplacement de l'insert filtrant 6, sans incidence sur la qualité du carburant récupéré à la sortie 5.

Il doit être évident pour les personnes versées dans l'art que la présente invention permet des modes de réalisation sous de nombreuses autres formes spécifiques sans l'éloigner du domaine d'application de l'invention comme revendiqué. En particulier, bien que les dessins illustrent le cas d'un élément tubulaire 14 de canalisation pour déplacer le clapet, il est clair qu'une poussée d'un tel clapet peut être réalisée par tout organe adapté agencé de façon similaire en s'étendant dans l'espace intérieur creux 15 délimité par le média filtrant 8. Ainsi en référence à la figure 6A, on comprend que le logement inférieur avec lequel communique le conduit central 20 peut servir pour un connecteur électrique et l'organe d'actionnement 32 est relié électriquement à ce connecteur de façon amovible. Pour cela, l'organe d'actionnement 32 inclut deux pôles de connexion dans une première partie de contact décalée par rapport à une deuxième partie de contact 40c qui s'engage contre le clapet 22. La portion 21d peut dans ce cas définir deux bornes raccordées au connecteur électrique et sur lesquelles viennent prendre appui les deux pôles de connexion.

Dans un tel cas, l'organe d'actionnement 32 peut présenter des fonctions de chauffage ou de détection (par exemple pour placer dans la zone Z2, de préférence en haut de cette zone, un capteur de pression utilisable pour déterminer une différence de pression et permettre la détection d'un colmatage par comparaison avec une pression détectée du côté de la zone Z1).

## Revendications

1. Filtre à carburant (1) comprenant :
- un réceptacle (10) comprenant une partie de base (BP) formant un fond (2a) et un couvercle (3) relié à la partie de base (BP) de façon amovible, le réceptacle étant pourvu d'une entrée (4) pour le carburant brut (CB) et d'une sortie (5) pour le carburant filtré (CF) située dans la partie de base (BP), un volume intérieur (V) étant défini entre la partie de base et le couvercle,
- un insert filtrant (6) disposé dans le volume intérieur (V) et qui comporte une extrémité axiale supérieure incluant un premier flasque (7), de préférence engagé contre le couvercle (3), une extrémité axiale inférieure et un média filtrant (8) sensiblement annulaire s'étendant autour d'un axe longitudinal (A) entre l'extrémité axiale supérieure et l'extrémité axiale inférieure, le média filtrant (8) ayant une face interne (8a) qui délimite un espace intérieur creux (15) en communication avec la sortie (5),
- un organe central s'étendant dans l'espace intérieur creux (15), qui présente une première extrémité (32a) directement solidaire ou voisine du premier flasque (7) et une deuxième extrémité (32b) opposée à la première extrémité,
- une paroi transversale (P) s'étendant sous l'extrémité axiale inférieure et l'organe central, en définissant une voie de passage (VP) entre l'espace intérieur creux (15) et la sortie (5),
**caractérisé en ce que** la paroi transversale (P) définit aussi, en parallèle de la voie de passage (VP), un passage d'évacuation pour acheminer des gaz (GC) contenus dans le carburant vers un canal de fuite (25) distinct de l'entrée (4) et de la sortie (5), une canalisation longitudinale prévue dans l'organe central permettant de faire circuler ces gaz accumulés dans un point haut du volume intérieur jusqu'audit passage d'évacuation afin qu'ils traversent la paroi transversale (P) via ledit passage avant de rejoindre le canal de fuite (25),
**et en ce que** le filtre à carburant comporte en outre un clapet permettant une ouverture sélective de la voie de passage (VP) dans une configuration opérationnelle de l'insert filtrant (6) sous l'effet d'un engagement entre la deuxième extrémité (32b) de l'organe central et ledit clapet (22) qui est monté mobile par rapport à la paroi transversale (P), ce grâce à quoi l'organe central est un organe d'actionnement (32) pour déplacer le clapet en fonction de la position de l'insert filtrant (6), le clapet (22) étant sollicité par défaut vers une position d'obturation de la voie de passage (VP).

2. Filtre à carburant selon la revendication 1, comprenant des moyens d'évacuation du carburant brut (CB), à l'opposé du couvercle (3).

3. Filtre à carburant selon la revendication 2, dans lequel un élément de fermeture (28) est monté mobile dans la partie de base (BP) pour sélectivement fermer un canal (29) de liaison entre le volume intérieur (V) et les moyens d'évacuation du carburant brut, dans une position d'appui de l'extrémité axiale inférieure de l'insert filtrant (6) contre l'élément de fermeture (28).

4. Filtre à carburant selon la revendication 1, 2 ou 3, dans lequel le clapet (22) s'étend à l'intérieur d'une zone intérieure déterminée (ZS) située entre le fond (2a) et la paroi transversale (P), le clapet étant mobile parallèlement à l'axe longitudinal (A) entre une position haute correspondant à la position d'obturation et une position basse dans laquelle la voie de passage (VP) communique avec la sortie (5) via la zone intérieure déterminée (ZS), la deuxième extrémité (32b) de l'organe d'actionnement (32) étant adaptée pour pousser le clapet (22).

5. Filtre à carburant selon la revendication 4, dans lequel la partie de base (BP) comporte :
- un bol (2) incluant l'entrée (4) et la sortie (5) ; et
- une paroi annulaire (16), de préférence intégralement formée d'un bloc avec le bol (2), qui s'étend vers le haut depuis le fond (2a) et définit un contact annulaire étanche avec un deuxième flasque (9) de forme générale annulaire définissant l'extrémité axiale inférieure de l'insert filtrant (6), la paroi annulaire (16) délimitant une circonférence externe de ladite zone intérieure déterminée (ZS), un élément de rappel élastique (R) qui sollicite le clapet (22) vers la position d'obturation étant logé dans la zone intérieure déterminée (ZS).

6. Filtre à carburant selon l'une quelconque des revendications précédentes, dans lequel la deuxième extrémité (32b) de l'organe d'actionnement (32) comporte :
- une première partie de contact (40a), qui forme de préférence une partie mâle pour s'insérer dans un conduit déterminé (21) d'une interface de raccordement (17), l'interface de raccordement incluant la paroi transversale (P) ; et
- une deuxième partie de contact (40c), de préférence décalée longitudinalement par rapport à ladite première partie de contact (40a), adaptée pour buter axialement contre le clapet (22) et permettant de pousser celui-ci vers le bas.

7. Filtre à carburant selon l'une quelconque des revendications précédentes, dans lequel l'organe d'actionnement (32) s'étend parallèlement à l'axe longitudinal (A).

8. Filtre à carburant selon la revendication 7 lorsqu'elle dépend des revendications 5 et 6, dans lequel la partie de base (BP) supporte une interface de raccordement (17) incluant la paroi transversale (P) et reliée de manière étanche à la paroi annulaire(16), l'interface de raccordement (17) formant une continuité d'étanchéité entre la paroi annulaire (16) et le deuxième flasque (9), de façon à ce qu'une zone (Z1) en amont de la filtration qui communique avec l'entrée (4) soit séparée d'une zone (Z2) en aval de la filtration qui communique avec la sortie (5), la paroi annulaire (16) entourant tout ou partie d'un conduit déterminé (21) défini par l'interface de raccordement (17), le conduit déterminé (21) faisant partie dudit passage d'évacuation pour capter les gaz dans la zone (Z1) en amont de la filtration via un orifice (50) de petite section situé au-dessus ou à l'extrémité supérieure de l'espace intérieur creux (15)

9. Filtre à carburant selon la revendication 8, dans lequel l'organe d'actionnement (32), directement solidaire du premier flasque (7), comporte un élément de canalisation (40) formant ladite canalisation longitudinale et qui s'étend dans l'espace intérieur creux (15) en communiquant avec le canal de fuite (25) pour les gaz, le canal de fuite (25) étant formé dans la partie de base (BP).

10. Filtre à carburant selon la revendication 8 ou 9, dans lequel l'orifice (50) de petite section est défini par le premier flasque (7) et communique avec l'intérieur de l'élément de canalisation (40).

11. Filtre à carburant selon l'une quelconque des revendications précédentes, dans lequel le clapet (22) présente une face supérieure d'obturation (22a), de préférence sensiblement plane, et au moins une projection (T1, T2) longitudinalement en saillie vers le haut depuis la face supérieure d'obturation, de sorte que la face supérieure d'obturation (22a) et une face d'engagement (36) de la projection sont respectivement situées au-dessus et en dessous d'un siège (S) défini par la paroi transversale (P).

12. Filtre à carburant selon l'une quelconque des revendications précédentes, dans lequel le clapet (22) comporte :
- une face inférieure butant contre une partie saillante par rapport au fond (2a) ; et
- un élément de coulissement tubulaire (23) monté autour d'un guide longitudinal (24) de la partie de base (BP), l'élément de coulissement tubulaire (23) s'étendant vers le bas depuis la face inférieure du clapet.

13. Support de montage (30) pour former l'extrémité inférieure du filtre à carburant (1) tel que défini dans l'une quelconque des revendications précédentes, comprenant :
- une partie de base (BP) formant un fond (2a) ayant une délimitation externe, pourvue d'une paroi annulaire (16) s'étendant autour d'un axe longitudinal jusqu'à un bord annulaire supérieur (16a), d'une entrée (4) pour du carburant brut (CB) et d'une sortie (5) pour du carburant filtré (CF) située du côté intérieur de la paroi annulaire (16),
- une paroi transversale (P) qui s'étend plus haut que le bord annulaire supérieur (16a) et recouvre une zone intérieure déterminée (ZS) délimitée par la paroi annulaire (16) en formant une voie de passage (VP) définissant un accès unique vers la sortie (5),
**caractérisé en ce que** le support de filtre comprend un clapet (22) monté mobile par rapport à la paroi transversale (P) et sollicité par défaut par des moyens de rappel élastique (R) vers une position haute d'obturation de la voie de passage (VP), le clapet (22) étant actionnable par poussée par le dessus, de sorte que l'accès vers la sortie (5) est sélectivement permis lorsque le clapet (22) est dans une position basse, la partie de base (BP) comprenant en outre un canal de fuite (25) pour des gaz (GC) contenus dans le carburant, distinct de l'entrée (4) et de la sortie (5) et s'étendant au travers de la zone intérieure déterminée (ZS).

14. Support de montage selon la revendication 13, dans lequel la paroi transversale (P) fait partie d'une interface de raccordement (17) qui présente :
- un fourreau (37) longitudinal qui s'étend depuis une face supérieure de la paroi transversale (P) ;
- un tronçon supérieur de conduit (21a) entouré par le fourreau et coaxial avec le fourreau (37) ; et
- un tronçon inférieur de conduit (21b), dans lequel débouche le tronçon supérieur (21a), qui fait saillie dans une direction opposée au fourreau (37), le tronçon inférieur (21b) et la voie de passage (VP) étant séparés entre eux par une portion de déviation (21 d) adaptée pour dévier un flux de gaz du tronçon supérieur (21a) vers le tronçon inférieur (21b).

15. Utilisation d'un élément de canalisation (40) dans un insert filtrant (6) du type pourvu d'un média filtrant (8) de forme annulaire s'étendant entre un premier flasque (7) et un deuxième flasque (9) et adapté pour la filtration de carburant, **caractérisée en ce que** l'élément de canalisation (40) et l'insert filtrant (6) sont fonctionnels dans un état assemblé dans un filtre (1) comportant le support de montage (30) de la revendication 13 ou 14, l'élément de canalisation (40) s'engageant par une première extrémité (32a) avec le premier flasque (7) en s'étendant dans un espace intérieur creux (15) délimité par le média filtrant (8), et formant un organe d'actionnement (32) par une deuxième extrémité (32b) de l'élément de canalisation (40) qui permet de déplacer le clapet (22) dudit support de montage (30) vers une position d'ouverture tout en débouchant vers le canal de fuite (25), l'un parmi l'élément de canalisation (40) et le premier flasque (7) présentant un orifice (50) dont la section est adaptée pour faire circuler sélectivement du gaz au travers de l'élément de canalisation (40).

## Patentansprüche

1. Kraftstofffilter (1) umfassend:
- einen Behälter (10), der einen Basisteil (BP), der einen Boden (2a) bildet, und eine Abdeckung (3) umfasst, die abnehmbar mit dem Basisteil (BP) verbunden ist, wobei der Behälter mit einem Einlass (4) für den Rohkraftstoff (CB) und mit einem Auslass (5) für den gefilterten Kraftstoff (CF) ausgestattet ist, der sich im Basisteil (BP) befindet, wobei ein Innenvolumen (V) zwischen dem Basisteil und der Abdeckung definiert ist;
- einen Filtereinsatz (6), der in dem Innenvolumen (V) angeordnet ist, und der ein oberes axiales Ende mit einem ersten Flansch (7) aufweist, der vorzugsweise in Eingriff mit der Abdeckung (3) steht, ein unteres axiales Ende und ein im Wesentlichen ringförmiges Filtermedium (8) aufweist, das sich um eine Längsachse (A) herum zwischen dem oberen axialen Ende und dem unteren axialen Ende erstreckt, wobei das Filtermedium (8) eine Innenseite (8a) aufweist, die einen hohlen Innenraum (15) begrenzt, der in Verbindung mit dem Auslass (5) steht,
- ein sich in dem hohlen Innenraum (15) erstreckendes zentrales Element, das ein erstes Ende (32a) aufweist, das direkt mit dem ersten Flansch (7) integriert oder diesem benachbart ist, und ein zweites Ende (32b) gegenüber dem ersten Ende aufweist;
- eine Querwand (P), die sich unter dem unteren axialen Ende und dem zentralen Element erstreckt, wobei sie einen Durchgangsweg (VP) zwischen dem hohlen Innenraum (15) und dem Auslass (5) definiert;
**dadurch gekennzeichnet, dass** die Querwand (P) weiterhin parallel zu dem Durchgangsweg (VP) einen Auslass-Durchgang zum Fördern der im Kraftstoff enthaltenen Gase (GC) zu einem vom Einlass (4) und vom Auslass (5) verschiedenen Austrittskanal (25) definiert; wobei eine in dem zentralen Element vorgesehene longitudinale Leitung es ermöglicht, die in einem hohen Punkt des Innenvolumens angesammelten Gase zu dem Auslass-Durchgang strömen zu lassen, so dass sie die Querwand (P) über den Durchgang durchqueren, bevor sie in den Austrittskanal (25) eintreten,
und dass der Kraftstofffilter ferner ein Ventil umfasst, das ein selektives Öffnen des Durchgangswegs (VP) in einer Betriebskonfiguration des Filtereinsatzes (6) unter der Wirkung eines Eingriffs zwischen dem zweiten Ende (32b) des zentralen Elements und dem Ventil (22) ermöglicht, das beweglich in Bezug auf die Querwand (P) montiert ist, wodurch das zentrale Element ein Betätigungselement (32) zum Bewegen des Ventils in Abhängigkeit von der Position des Filtereinsatzes (6) ist, wobei das Ventil (22) standardmäßig zu einer Schließposition des Durchgangswegs (VP) vorgespannt ist.

2. Kraftstofffilter nach Anspruch 1, umfassend Mittel zum Ablassen des Rohkraftstoffs (CB), gegenüber der Abdeckung (3).

3. Kraftstofffilter nach Anspruch 2, wobei ein Verschlusselement (28) beweglich in dem Basisteil (BP) montiert ist, um selektiv einen Verbindungskanal (29) zwischen dem Innenvolumen (V) den Mitteln zum Ablassen des Rohkraftstoffs zu schließen, in einer Anlageposition des unteren axialen Endes des Filtereinsatzes (6) an dem Verschlusselement (28).

4. Kraftstofffilter nach Anspruch 1, 2 oder 3, wobei sich das Ventil (22) innerhalb eines bestimmten Innenbereichs (ZS) erstreckt, der sich zwischen dem Boden (2a) und der Querwand (P) befindet, wobei das Ventil parallel zur Längsachse (A) zwischen einer der Schließposition entsprechenden hohen Position und einer niedrigen Position beweglich ist, in welcher der Durchgangsweg (VP) über den bestimmten Innenbereich (ZS) mit dem Auslass (5) in Verbindung steht, wobei das zweite Ende (32b) des Betätigungselements (32) dazu angepasst ist, um gegen das Ventil (22) zu drücken.

5. Kraftstofffilter nach Anspruch 4, wobei der Basisteil (BP) umfasst:
- eine Schüssel (2) mit dem Einlass (4) und dem Auslass (5); und
- eine vorzugsweise einstückig mit der Schüssel (2) ausgebildete, ringförmige Wand (16), die sich vom Boden (2a) nach oben erstreckt und einen abgedichteten ringförmigen Kontakt mit einem zweiten Flansch (9) von allgemein ringförmiger Form definiert, der das untere axiale Ende des Filtereinsatzes (6) definiert, wobei die ringförmige Wand (16) einen Außenumfang des bestimmten Innenbereichs (ZS) begrenzt, wobei ein elastisches Rückstellelement (R), welches das Ventil (22) in Richtung der Schließposition drängt, in dem bestimmten Innenbereich (ZS) untergebracht ist.

6. Kraftstofffilter nach einem der vorhergehenden Ansprüche, wobei das zweite Ende (32b) des Betätigungselements (32) umfasst:
- einen ersten Kontaktteil (40a), der vorzugsweise einen männlichen Teil bildet, um in einen bestimmten Kanal (21) einer Verbindungsschnittstelle (17) eingeführt zu werden, wobei die Verbindungsschnittstelle die Querwand (P) enthält; und
- einen zweiten Kontaktteil (40c), der vorzugsweise in Längsrichtung in Bezug zu dem ersten Kontaktteil (40a) versetzt ist, und der ausgelegt ist, um axial an dem Ventil (22) anzuliegen, und der es ermöglicht, dieses nach unten zu drücken.

7. Kraftstofffilter nach einem der vorhergehenden Ansprüche, wobei sich das Betätigungselement (32) parallel zur Längsachse (A) erstreckt.

8. Kraftstofffilter gemäß Anspruch 7 in Rückbeziehung auf die Ansprüche 5 und 6, wobei der Basisteil (BP) eine Verbindungsschnittstelle (17) stützt, welche die Querwand (P) umfasst und dicht mit der ringförmigen Wand (16) verbunden ist, wobei die Verbindungsschnittstelle (17) eine durchgehende Dichtung bildet zwischen der ringförmigen Wand (16) und dem zweiten Flansch (9), so dass ein Bereich (Z1) stromaufwärts der Filtration, der mit dem Einlass (4) in Verbindung steht, von einem Bereich (Z2) stromabwärts der Filtration, der mit dem Auslass (5) in Verbindung steht, getrennt ist, wobei die ringförmige Wand (16) einen bestimmten Kanal (21) ganz oder teilweise umgibt, der durch die Verbindungsschnittstelle (17) definiert ist, wobei der bestimmte Kanal (21) einen Teil des Auslass-Durchgangs bildet, um die Gase in dem Bereich (Z1) stromaufwärts der Filtration einzufangen, über eine Öffnung (50) mit kleinem Querschnitt, die sich oberhalb oder am oberen Ende des hohlen Innenraums (15) befindet.

9. Kraftstofffilter nach Anspruch 8, wobei das Betätigungselement (32), das direkt mit dem ersten Flansch (7) integriert ist, ein Rohrelement (40) umfasst, das die longitudinale Leitung bildet und sich in den hohlen Innenraum (15) erstreckt, wobei es mit dem Austrittskanal (25) für die Gase in Verbindung steht, wobei der Austrittskanal (25) im Basisteil (BP) ausgebildet ist.

10. Kraftstofffilter nach Anspruch 8 oder 9, wobei die Öffnung (50) mit kleinem Querschnitt durch den ersten Flansch (7) definiert ist und mit dem Inneren des Rohrelements (40) in Verbindung steht.

11. Kraftstofffilter nach einem der vorhergehenden Ansprüche, wobei das Ventil (22) eine obere Verschlussfläche (22a) aufweist, die vorzugsweise im Wesentlichen eben ist, und mindestens einen Vorsprung (T1, T2), der in Längsrichtung nach oben von der oberen Verschlussfläche absteht, so dass sich die obere Verschlussfläche (22a) und eine Eingriffsfläche (36) des Vorsprungs jeweils über bzw. unter einem durch die Querwand (P) definierten Sitz (S) befinden.

12. Kraftstofffilter nach einem der vorhergehenden Ansprüche, wobei das Ventil (22) umfasst:
- eine Unterseite, die an einem in Bezug auf den Boden (2a) vorspringenden Teil anliegt; und
- ein rohrförmiges Schiebeelement (23), das um eine Längsführung (24) des Basisteils (BP) herum montiert ist, wobei sich das rohrförmige Schiebeelement (23) von der Unterseite des Ventils nach unten erstreckt.

13. Montagehalterung (30) zum Bilden des unteren Endes des Kraftstofffilters (1), wie er in einem der vorhergehenden Ansprüche definiert ist, umfassend:
- einen Basisteil (BP), der einen Boden (2a) mit einer äußeren Abgrenzung bildet, ausgestattet mit einer ringförmigen Wand (16), die sich um eine Längsachse herum bis zu einem oberen ringförmigen Rand (16a) erstreckt, mit einem Einlass (4) für Rohkraftstoff (CB) und mit einem Auslass (5) für gefilterten Kraftstoff (CF), der sich an der Innenseite der ringförmigen Wand (16) befindet;
- eine Querwand (P), die sich höher als der obere ringförmige Rand (16a) erstreckt und einen bestimmten Innenbereich (ZS) abdeckt, der durch die ringförmige Wand (16) begrenzt ist, und einen Durchgangsweg (VP) bildet, der einen einzigen Zugang zum Auslass (5) definiert,
**dadurch gekennzeichnet, dass** die Filter-Halterung ein Ventil (22) umfasst, das relativ zur Querwand (P) beweglich montiert ist und standardmäßig durch elastische Rückstellmittel (R) zu einer hohen Position zum Verschließen des Durchgangs (VP) vorgespannt ist, wobei das Ventil (22) durch Drücken von oben bedienbar ist, so dass der Zugang zum Auslass (5) selektiv erlaubt ist, wenn sich das Ventil (22) in einer niedrigen Position befindet, wobei der Basisteil (BP) ferner einen Austrittskanal (25) für im Kraftstoff enthaltene Gase (GC) umfasst, der vom Einlass (4) und vom Auslass (5) getrennt ist und durch den bestimmten Innenbereich (ZS) hindurch verläuft.

14. Montagehalterung nach Anspruch 13, wobei die Querwand (P) Teil einer Verbindungsschnittstelle (17) ist, die aufweist:
- eine longitudinale Hülse (37), die sich von einer Oberseite der Querwand (P) erstreckt;
- einen oberen Kanal-Abschnitt (21a), der von der Hülse umgeben und koaxial zur Hülse (37) ist; und
- einen unteren Kanal-Abschnitt (21b), in den der obere Abschnitt (21a) mündet, der in eine der Hülse (37) entgegengesetzte Richtung vorsteht, wobei der untere Abschnitt (21b) und der Durchgangsweg (VP) voneinander durch einen Ablenkabschnitt (21d) getrennt sind, der dazu ausgelegt ist, einen Gasstrom vom oberen Abschnitt (21a) zum unteren Abschnitt (21b) abzulenken.

15. Verwendung eines Rohrelements (40) in einem Filtereinsatz (6) des Typs, der mit einem ringförmigen Filtermedium (8) versehen ist, das sich zwischen einem ersten Flansch (7) und einem zweiten Flansch (9) erstreckt und zur Filtration von Kraftstoff ausgebildet ist; **dadurch gekennzeichnet, dass** das Rohrelement (40) und der Filtereinsatz (6) in einem zusammengebauten Zustand in einem Filter (1), der die Montagehalterung (30) nach Anspruch 13 oder 14 umfasst, wirksam sind, wobei das Rohrelement (40) an einem ersten Ende (32a) mit dem ersten Flansch (7) in Eingriff steht, wobei es sich in einem durch das Filtermedium (8) begrenzten hohlen Innenraum (15) erstreckt und ein Betätigungselement (32) bildet, durch ein zweites Ende (32b) des Rohrelements (40), das es ermöglicht, das Ventil (22) der Montagehalterung (30) zu einer Öffnungsposition zu bewegen, während es in den Austrittskanal (25) mündet; wobei das Rohrelement (40) oder der erste Flansch (7) eine Öffnung (50) aufweist, deren Querschnitt so ausgelegt ist, dass sie selektiv Gas durch das Rohrelement (40) strömen lässt.

## Claims

1. Fuel filter (1) comprising:
- a receptacle (10) comprising a base portion (BP) forming a bottom (2a) and a cover (3) detachably connected to the base portion (BP), the receptacle being provided with an inlet (4) for unfiltered fuel (CB) and an outlet (5) for filtered fuel (FC) which is located in the base portion (BP), an inside volume (V) being defined between the base portion and the cover,
- a filter insert (6) arranged in the inside volume (V) and having an upper axial end including a first flange (7), preferably engaged against the cover (3), a lower axial end, and a substantially annular filter medium (8) extending about a longitudinal axis (A) between the upper axial end and the lower axial end, the filter medium (8) having an inner face (8a) which defines a hollow internal space (15) in communication with the outlet (5),
- a central member extending in the hollow internal space (15), having a first end (32a) directly integral or adjacent to the first flange (7) and a second end (32b) opposite to the first end,
- a transverse wall (P) extending beneath at least one among the lower axial end and the central member, defining a passageway (VP) between the hollow internal space (15) and the outlet (5),
**characterized in that** the transverse wall (P) also defines, parallel to the passageway (VP), a discharge passage for conveying gases (GC) contained in the fuel to an escape channel (25) that is distinct from the inlet (4) and the outlet (5), a longitudinal channel provided in the central member allowing circulation of these gases, which are accumulated at a high point of the inside volume, to the discharge passage so that they pass through the transverse wall (P) via said passage before joining the escape channel (25),
**and in that** the fuel filter further comprises a valve enabling selectively opening the passageway (VP) in an operative configuration of the filter insert (6) under the effect of an engagement between the second end (32b) of the central member and said valve (22) which is mounted so as to move relative to the transverse wall (P), the central member thereby being an actuating member (32) for moving the valve according to the position of the filter insert (6), the valve (22) by default being biased toward a position which closes the passageway (VP).

2. Fuel filter according to claim 1, comprising discharge means for unfiltered fuel (CB), opposite to the cover (3).

3. Fuel filter according to claim 2, wherein a closure member (28) is movably mounted in the base portion (BP) so as to selectively close a connecting channel (29) between the inside volume (V) and the discharge means for unfiltered fuel, in a position where the lower axial end of the filter insert (6) bears against the closure member (28).

4. Fuel filter according to claim 1, 2, or 3, wherein the valve (22) extends inside a defined internal region (ZS) located between the bottom (2a) and the transverse wall (P), the valve being movable parallel to the longitudinal axis (A) between a raised position corresponding to the closed position and a lowered position where the passageway (VP) communicates with the outlet (5) via the defined internal region (ZS), the second end (32b) of the actuating member (32) being adapted to urge the valve (22).

5. Fuel filter according to claim 4, wherein the base portion (BP) comprises:
- a bowl (2) including the inlet (4) and the outlet (5); and
- an annular wall (16), preferably integrally formed as one piece with the bowl (2), which extends upwardly from the bottom (2a) and defines a sealed annular contact with a second flange (9) of generally annular shape defining the lower axial end of the filter insert (6), the annular wall (16) defining an outer circumference of said defined internal region (ZS), a resilient return member (R) which biases the valve (22) towards the closed position being accommodated in the defined internal region (ZS).

6. Fuel filter according to any preceding claim, wherein the second end (32b) of the actuating member (32) comprises:
- a first contact portion (40a), which preferably forms a male portion for insertion into a defined pipe (21) of a connection interface (17), the connection interface including the transverse wall (P); and
- a second contact portion (40c), preferably offset longitudinally relative to said first contact portion (40a), adapted to abut axially against the valve (22) and to push it downward.

7. Fuel filter according to any preceding claim, wherein the actuating member (32) extends parallel to the longitudinal axis (A).

8. Fuel filter according to claim 7 when dependent on claims 5 and 6, wherein the base portion (BP) supports a connection interface (17) including the transverse wall (P) and sealingly connected to the annular wall (16), the connection interface (17) forming a sealing continuity between the annular wall (16) and the second flange (9), so that a region (Z1) upstream of the filtration that communicates with the inlet (4) is separated from a region (Z2) downstream of the filtration that communicates with the outlet (5), the annular wall (16) surrounding all or part of a pipe (21) defined by the connection interface (17), the defined pipe (21) forming part of said discharge passage for capturing the gases in the region (Z1) upstream of the filtration via a port (50) of small cross-section located above or at the upper end of the hollow internal space (15).

9. Fuel filter according to claim 8, wherein the actuating member (32), directly integral with the first flange (7), comprises a piping member (40) forming said longitudinal channel and extending within the hollow internal space (15) and in communication with the escape channel (25) for gases, the escape channel (25) being formed in the base portion (BP).

10. Fuel filter according to claim 8 or 9, wherein the port (50) of small cross-section is defined by the first flange (7) and communicates with the interior of the piping member (40).

11. Fuel filter according to any preceding claim, wherein the valve (22) has an upper sealing face (22a), preferably substantially flat, and at least one projection (T1, T2) protruding longitudinally upwards from the upper sealing face, such that the upper sealing face (22a) and an engaging face (36) of the projection are respectively located above and below a seat (S) defined by the transverse wall (P).

12. Fuel filter according to any preceding claim, wherein the valve (22) has:
- a lower face abutting against a portion that projects relative to the bottom (2a); and
- a tubular sliding member (23) mounted around a longitudinal guide (24) of the base portion (BP), the tubular sliding member (23) extending downwardly from the lower face of the valve.

13. Mounting support (30) for forming the lower end of the fuel filter (1) as defined in any one of the preceding claims, comprising:
- a base portion (BP) forming a bottom (2a) having an outer boundary, provided with an annular wall (16) extending about a longitudinal axis to an upper annular edge (16a), an inlet (4) for unfiltered fuel (CB) and an outlet (5) for filtered fuel (FC) which is located on the inner side of the annular wall (16),
- a transverse wall (P) which extends higher than the upper annular edge (16a) and covers an internal region (ZS) defined by the annular wall (16), forming a passageway (VP) that defines a single access to the outlet (5),
**characterized in that** the mounting support comprises a valve (22) mounted so as to be movable relative to the transverse wall (P) and biased by default by resilient return means (R) towards a raised position which closes the passageway (VP), the valve (22) being actuated by pushing from above, so that access to the outlet (5) is selectively enabled when the valve (22) is in a lowered position, the base portion (BP) further comprising an escape channel (25) for gases (GC) contained in the fuel, distinct from the inlet (4) and outlet (5) and extending through the defined internal region (ZS).

14. Mounting support according to claim 13, wherein the transverse wall (P) is part of a connection interface (17) comprising:
- a longitudinal sleeve (37) extending from an upper face of the transverse wall (P);
- an upper pipe segment (21a) surrounded by the sleeve and coaxial with the sleeve (37); and
- a lower pipe segment (21b) which the upper segment (21a) opens into, which protrudes in a direction opposite to the sleeve (37), the lower segment (21b) and the passageway (VP) being separated from each other by a diverting portion (21d) adapted to divert a stream of gas from the upper segment (21a) to the lower segment (21b).

15. Use of a piping member (40) in a filter insert (6) of the type provided with a filter medium (8) of annular shape extending between a first flange (7) and a second flange (9) and adapted for fuel filtration, **characterized in that** the piping member (40) and the filter insert (6) are operative in a state assembled in a filter (1) comprising the mounting support (30) of claim 13 or 14, the piping member (40) engaging by a first end (32a) with the first flange (7) while extending into a hollow internal space (15) defined by the filter medium (8), and forming an actuating member (32) by a second end (32b) of the piping member (40) which enables moving the valve (22) of said mounting support (30) to an open position while leading towards the escape channel (25), one among the piping member (40) and the first flange (7) having a port (50) whose cross-section is adapted for selectively circulating the gas through the piping member (40).
